# FASCICULE DE BREVET EUROPEEN

(11) **EP 1 960 685 B1**
(45) Date de publication et mention de la délivrance du brevet: **19.10.2016**
(21) Numéro de dépôt: 06831359.2
(22) Date de dépôt: 20.11.2006
(51) Int. Cl.: B60G 11/16

(54) **APPUI DE RESSORT À FLEXIBILITÉ VARIABLE**
FEDERSTÜTZE MIT VARIABLER FLEXIBILITÄT
VARIABLE-FLEXIBILITY SPRING SUPPORT

(30) Priorité: 14.12.2005 FR 0553875
(43) Date de publication de la demande: 27.08.2008
(73) Titulaire: Renault SAS, 92100 Boulogne Billancourt (FR)
(72) Inventeur: DESPREZ, Sébastien, F-78000 Versailles (FR); SZYMANSKI, Joël, F-78340 Les Clayes Sous Bois (FR)
(86) Numéro de dépôt international: PCT/FR2006/051197
(87) Numéro de publication internationale: WO 2007/068835

(56) Documents cités:
- EP-A- 0 778 166
- FR-A- 2 799 693
- US-A1- 2002 158 385

## Description

La présente invention se rapporte au domaine des suspensions de véhicules automobiles, et, plus particulièrement, aux suspensions à raideur variable.

Ce type de suspension est, en effet, de plus en plus répandu, en réponse à des besoins de confort des véhicules.

Les solutions les plus couramment utilisées pour obtenir une raideur variable consistent à réaliser un ensemble de suspension à ressort dans lequel le ressort est un ressort à fil de section variable, le ressort prenant appui sur un élément en matériau élastomère : la raideur est alors minimale tant que les spires de plus faible diamètre du ressort ne sont pas en contact avec l'élément d'appui élastomère, puis augmente avec la longueur de spire en contact avec l'élément d'appui. Pour assurer un bon maintien du ressort, celui-ci peut être clipsé sur l'élément d'appui élastomère ; une telle solution permet en outre un contact non agressif avec le ressort.

La réalisation d'un ressort de section variable est toutefois relativement coûteuse, et d'autres solutions ont été envisagées pour réaliser une raideur variable de l'ensemble, en particulier l'utilisation d'un élément d'appui à flexibilité variable, ce qui permet alors d'utiliser un ressort à fil de section constante (voir par exemple, et de manière non exhaustive, le document EP0924445).

Un premier mode de réalisation d'un élément d'appui à flexibilité variable consiste, par exemple, à former un ensemble de créneaux sur la surface de l'élément d'appui, réalisé dans un matériau élastomère, en contact avec le ressort : au repos, la raideur en compression est minimale ; en phase de compression, les créneaux se déforment et la raideur augmente. Cette solution n'est toutefois pas entièrement satisfaisante : en particulier, elle présente une mauvaise tenue au gravillonnage, les gravillons s'incrustant entre les créneaux et pouvant blesser le ressort. De plus, elle ne couvre pas les besoins d'augmentation rapide de la raideur, et sa tenue en endurance est limitée, du fait des sollicitations alternées auxquelles est soumis le matériau élastomère constituant l'élément d'appui.

Un second mode de réalisation d'un élément d'appui à flexibilité variable consiste à placer, au sein de l'élément d'appui élastomère, un insert rigide, par exemple en aluminium ou en plastique. L'insert peut, de même que la surface au contact du ressort, comporter des créneaux, ce qui permet d'obtenir une raideur maximale plus importante tout en augmentant la tenue en endurance.

Un risque de dégradation des performances au cours du temps subsiste toutefois, du fait du fluage du matériau élastomère constituant l'élément d'appui.

Le document EP 0778166 A2 décrit un élément d'appui pour un ressort de suspension selon le préambule de la revendication 1.

La présente invention a pour but de proposer un élément d'appui de ressort de suspension à flexibilité variable, qui ne présente pas les inconvénients précités, et qui soit d'une réalisation simple et peu coûteuse.

L'invention atteint son but grâce à un élément d'appui pour un ressort de suspension d'un véhicule automobile, composé d'une partie principale et d'un insert sensiblement rigide ou semi-rigide, le ressort de suspension étant en appui direct sur l'insert sensiblement rigide ou semi-rigide , caractérisé en ce que la partie principale est formée d'un socle sensiblement tronconique à partir de la face supérieure, de plus petit diamètre, duquel s'étend, coaxialement, un appendice sensiblement tronconique, dont le plus grand diamètre est sensiblement inférieur au plus petit diamètre du socle.

Dans un premier mode de réalisation, la partie principale de l'élément d'appui comporte un socle sensiblement conique évidé au voisinage de son axe de révolution, à partir duquel s'étend, sensiblement coaxialement, une seconde partie conique de plus petit diamètre que le socle, également évidée au voisinage de son axe de révolution, et l'invention présente une ou plusieurs des caractéristiques suivantes :
- la partie principale comporte une lèvre de saturation de diamètre sensiblement supérieur au diamètre de sa base,
- la lèvre de saturation est placée sur le socle de la partie principale, à l'opposé de la seconde partie conique,
- l'insert a une forme sensiblement similaire à celle de la partie principale, et coiffe sensiblement, lors de l'assemblage, la seconde partie conique de celle-ci,
- la base de l'insert forme, une fois l'insert emboîté sur le socle de la partie principale de l'élément d'appui selon l'invention, un bord tombé de saturation destinée à améliorer la tenue en endurance de l'élément d'appui,
- à l'opposé de la base de l'insert, la seconde partie conique de celui-ci comporte, au voisinage de sa partie plus petit diamètre, une lèvre de diamètre supérieur au plus petit diamètre de la seconde partie conique,
- le ressort est inséré entre la face supérieure de la base de l'insert et la face inférieure de la lèvre placée sur la seconde partie conique de l'insert, il est maintenu dans son logement par clipsage au moyen de languettes appropriées,
- le diamètre du bord tombé de saturation de l'insert est sensiblement égal au diamètre de la lèvre de saturation formée à la base du socle de la partie principale de l'élément d'appui selon l'invention,
- la partie principale est réalisée dans un matériau élastomère, par exemple du caoutchouc,
- l'insert est réalisé dans un matériau plastique rigide, par exemple en polyuréthane.

Dans un second mode de réalisation, l'insert est semi-rigide, ne comporte pas de bord tombé de saturation, et est muni, sur la face inférieure de sa base, d'un ensemble de nervures mâles destinées à être engagées dans un ensemble de nervures femelles complémentaires réalisées sur la face supérieure du socle de la partie principale de l'élément d'appui selon l'invention.

D'autres caractéristiques et avantages ressortiront à la lecture de la description qui suit, en référence aux figures annexées sur lesquelles :
- la figure 1 est une vue schématique d'ensemble, en perspective, d'un ressort de suspension et des principaux éléments de son environnement,
- la figure 2 est une vue schématique en coupe, selon un plan de symétrie, d'un premier mode de réalisation d'un élément d'appui selon l'invention,
- les figures 3A et 3B sont des vues schématiques en coupe, selon un plan de symétrie, d'un premier mode de réalisation des principaux constituants d'un élément d'appui selon l'invention,
- la figure 4 est une courbe caractéristique de l'appui du ressort de suspension, pour un dispositif de suspension conventionnel et pour le premier mode de réalisation de l'invention,
- la figure 5 est une vue schématique en coupe, selon un plan de symétrie, d'un élément d'appui selon un second mode de réalisation de l'invention,
- les figures 6A et 6B sont des vues schématiques en coupe, selon un plan de symétrie, des principaux constituants d'un élément d'appui selon un second mode de réalisation de l'invention.

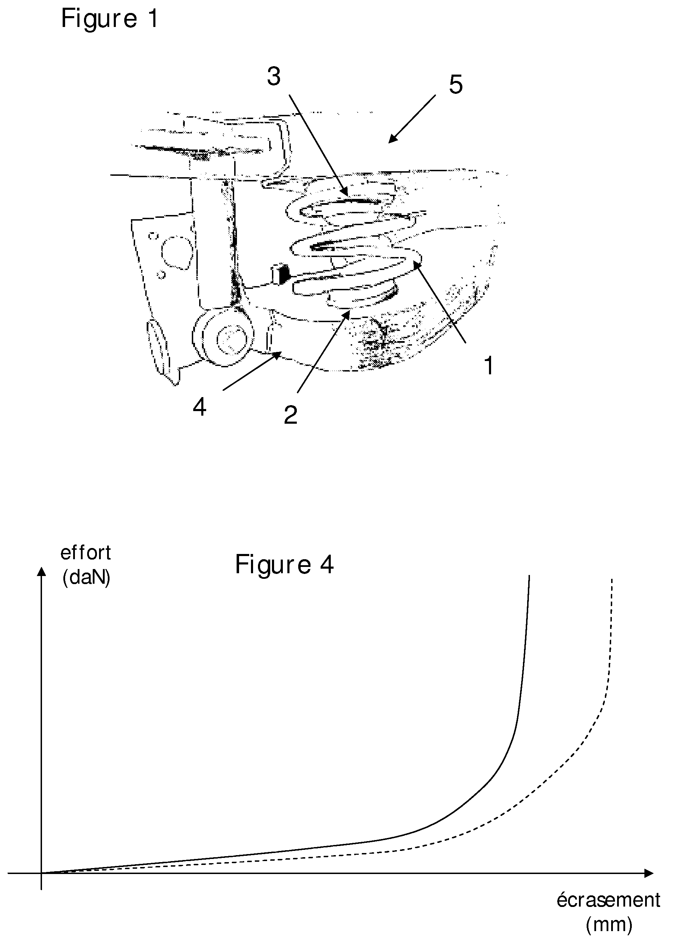

Un ensemble de suspension à ressort tel que classiquement connu dans l'état de la technique, schématiquement représenté sur la figure 1, comporte un ressort de suspension 1 dont chacune des extrémités est au contact respectivement d'un élément d'appui inférieur 2 et d'un élément d'appui supérieur 3, les appuis inférieur 2 et supérieur 3 étant liés, par des moyens appropriés (non représentés sur la figure 1), respectivement au train 4 et à la caisse 5 du véhicule. Selon des modes de réalisation connus dans l'état de la technique, les éléments d'appui 2 et 3 comportent chacun une partie jouant le rôle de centreur et permettant un positionnement fixe et reproductible du ressort de suspension 1 par rapport au train 4 et à la caisse 5. Selon un mode de réalisation également connu dans l'état de la technique pour réaliser une suspension de raideur variable, lorsque le ressort de suspension 1 est un ressort à fil de section constante, l'appui supérieur 3, lié à la caisse 5 du véhicule, présente une flexibilité variable.

Un élément d'appui supérieur 3 selon l'invention comporte une partie principale 6 et un insert 7, rigide ou semi-rigide, au contact direct duquel le ressort de suspension 1 vient se placer.

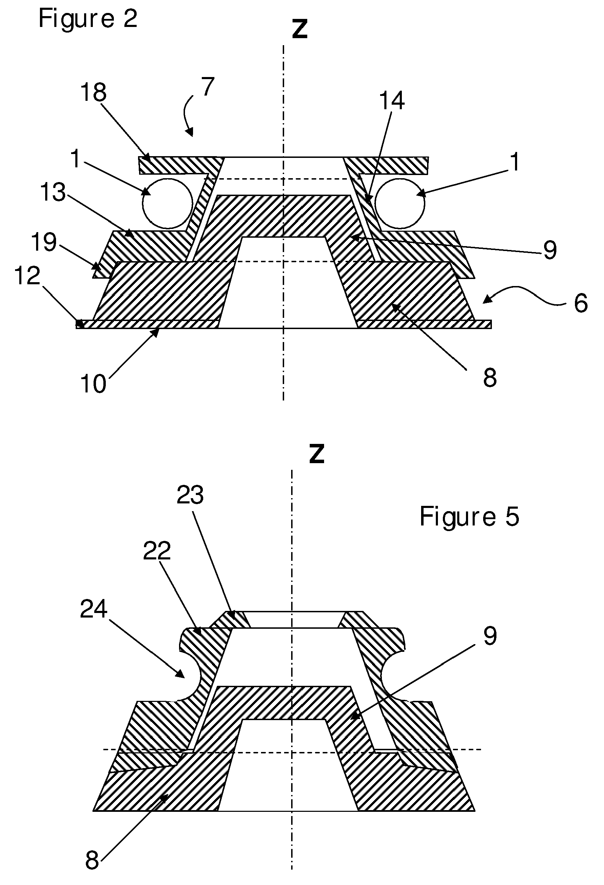

Ainsi que le présentent les figures 2 à 5, la partie principale 6 est formée d'un socle 8 et d'un appendice 9, sensiblement tronconiques, coaxiaux d'axe de révolution Z, le plus grand diamètre de l'appendice 9 étant sensiblement plus petit que le plus petit diamètre du socle 8. Lorsque l'ensemble de suspension est monté sur le véhicule, la face inférieure 10, de plus grand diamètre, du socle 8, est en contact avec la caisse 5, et l'appendice 9 s'étend alors, de son pl us grand vers son plus petit diamètre, à partir de la face supérieure 11 du socle 8. Dans un souci d'allégement et de simplification de réalisation, un évidemment axial est pratiqué dans le socle 8 et dans l'appendice 9. Avantageusement, la partie principale 6 est réalisée dans un matériau plastique relativement rigide tel que du polyuréthane.

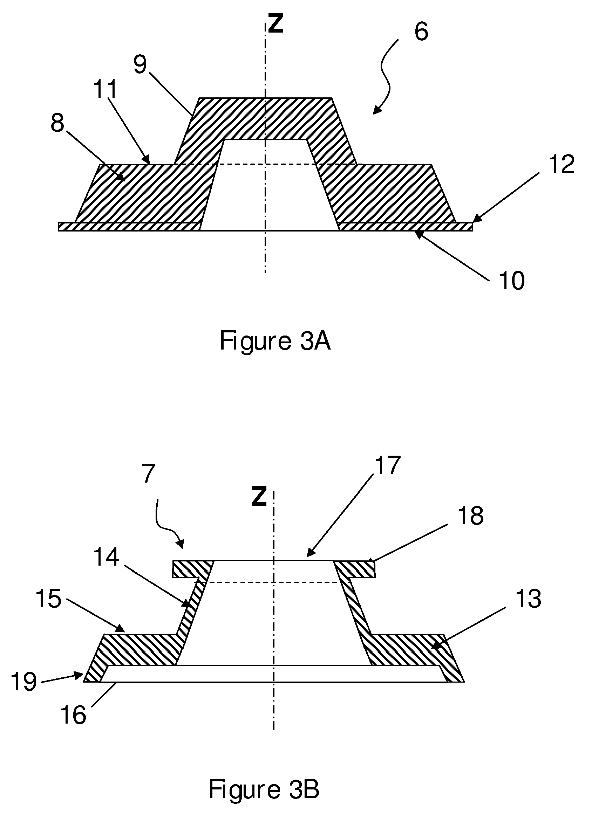

Dans un premier mode de réalisation de l'invention, plus spécifiquement présenté par les figures 2, 3A et 3B, le diamètre de la face inférieure 10 du socle 8 est sensiblement élargi et forme une lèvre 12, ou lèvre de saturation, dont le rôle sera précisé ultérieurement.

Selon ce mode de réalisation, l'insert 7 de l'élément d'appui 3 a une forme sensiblement similaire à la forme de la partie principale 6 du élément d'appui 3. L'insert 7 se compose ainsi d'une base 13 et d'un appendice 14. La base 13 et l'appendice 14 sont sensiblement tronconiques et coaxiaux, et l'appendice 14 s'étend, de son plus grand à son plus petit diamètre, à partir de la face supérieure 15, de plus petit diamètre, de la base 13. L'insert 7 comporte également un évidemment axial, dont la forme intérieure et les dimensions sont complémentaires de la forme extérieure et des dimensions de l'appendice 9 de la partie principale 6. Le plus grand diamètre de la base 13 de l'insert 7 est sensiblement supérieur au plus petit diamètre du socle 8 de la partie principale 6 de l'élément d'appui 3 selon l'invention, et la partie inférieure de la base 13 comporte également un lamage 16, dont la forme et les dimensions sont complémentaires de la forme et des dimensions de la partie supérieure du socle 8 de la partie principale 6 de l'élément d'appui 3. La face supérieure 17, de plus petit diamètre, de l'appendice 14 de l'insert 7, comporte en outre une lèvre 18 de plus grand diamètre, dont le rôle sera précisé ultérieurement.

Pour ce mode de réalisation de l'invention, l'insert 7 de l'élément d'appui 3 selon l'invention est réalisé dans un matériau plastique plus rigide que le matériau utilisé pour la réalisation de la partie principale 6 de l'élément d'appui 3 selon l'invention.

Lors de l'assemblage des partie principale 6 et insert 7 pour former l'élément d'appui 3 selon l'invention, et comme le présente la figure 2, l'insert 7 est, grâce au lamage 17 ménagé dans sa partie inférieure, placé sur la partie supérieure du socle 8 de la partie principale 6. L'insert 7 est ainsi emboîté sur la partie principale 6 de l'élément d'appui 3 selon l'invention, et le bord inférieur 19, ou bord de saturation, de la base 13 de l'insert 7 recouvre le bord supérieur du socle 8 de la partie principale 6. Le ressort de suspension 1 est placé autour de l'appendice 14 de l'insert 7, entre la face supérieure de la base 13 et la face inférieure de la lèvre 18, l'appendice 14 jouant également le rôle de centreur du ressort 1 et permettant son positionnement reproductible, et la lèvre 18 jouant le rôle de butée empêchant le ressort 1 de sortir de son logement ainsi défini.

Un tel agencement permet de limiter fortement, voire d'éliminer l'incrustation de gravillons entre le ressort de suspension 1 et son appui, réduisant d'autant les risques d'endommagement du ressort 1 par gravillonnage.

Par ailleurs, lorsque le ressort est sollicité en compression, la présence et la configuration du bord de saturation 19 permettent de modifier la raideur de l'appui, en particulier à la saturation, c'est-à-dire lorsque le ressort est complètement compressé, ainsi que le présente la figure 4. Sur ce tracé de la raideur de l'appui d'un ressort de suspension 1 en fonction de son écrasement, la courbe en traits discontinus représente le cas d'un élément d'appui 3 ne comportant pas de bord de saturation 19 tel que configuré dans le premier mode de réalisation de l'invention, et la courbe en trait plein représente le cas où le ressort 1 prend appui sur un élément 3 comportant un bord de saturation 19 tel que configuré dans le premier mode de réalisation de l'invention. Il apparaît clairement que l'augmentation de la raideur est plus rapide dans ce dernier cas.

La présence d'un tel bord de saturation 19 permet en outre d'améliorer la tenue en endurance de la matière assurant la partie souple de la courbe caractéristique de l'appui (c'est-à-dire, ici, la matière constituant la partie principale 6 de l'élément d'appui 3 selon l'invention).

La lèvre de saturation 12 de la face inférieure 10 de la partie principale 6 permet alors d'éliminer les problèmes de bruyance liés au contact brutal du bord de saturation 19 avec la caisse 5 du véhicule. Préférentiellement, mais de manière non exclusive, cette lèvre de saturation 12 sera réalisée dans un matériau élastomère tel que le caoutchouc : toutefois, lorsque la partie principale 6 est réalisée dans un autre matériau qu'un matériau élastomère (par exemple, et de manière non limitative, lorsqu'elle est réalisée en polyuréthane), la lèvre de saturation 12 sera préférentiellement obtenue au moyen d'une rondelle de matériau élastomère (par exemple du caoutchouc) de dimensions appropriées, placée entre la face inférieure 10 du socle 8 de la partie principale 6 et la caisse 5 du véhicule.

Il est à noter que, pour augmenter la diversité des diamètres de fil constituant le ressort de suspension 1, l'insert 7 peut également être bi-matière dont un composant est souple et l'autre rigide.

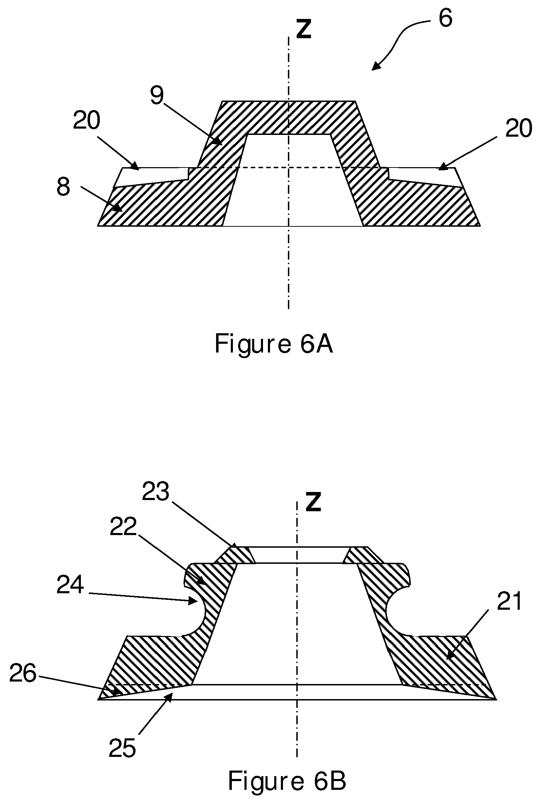

Les figures 5, 6A et 6B présentent un second mode de réalisation de l'invention, dans lequel l'insert 7 de l'élément d'appui 3 est semi-rigide, préférentiellement, mais de manière non exclusive, réalisé dans un matériau élastomère tel que du caoutchouc. Dans ce mode de réalisation, la partie principale 6 de l'élément d'appui 3, présentée par la figure 6A, est similaire à la partie principale 6 telle que décrite dans le premier mode de réalisation de l'invention, mais la face inférieure 10 de son socle 8 ne comporte pas de lèvre de saturation 12. En outre, des nervures femelles 20, sensiblement radiales, régulièrement réparties, sont ménagées sur la face supérieure 11 de son socle 8 : le rôle des nervures 20 sera exposé ultérieurement. Dans des modes de réalisation alternatifs, des nervures 20 sont remplacées par une ou plusieurs gorges concentriques, de forme appropriée.

Dans ce mode de réalisation, et ainsi que le présente la figure 6B, l'insert 7 est formé d'une base 21 sensiblement tronconique à partir de la face de plus petit diamètre de laquelle s'étend, coaxialement, un appendice sensiblement tronconique 22 dont la partie supérieure est munie d'une calotte sensiblement hémisphérique 23. Le plus grand diamètre de la base 21 est sensiblement égal au diamètre de la face supérieure 11 du socle 8 de la partie principale 6, de sorte que, une fois la partie principale 6 et l'insert 7 assemblés pour former l'élément d'appui 3 selon l'invention, la base 21 de l'insert 7 ne recouvre pas le bord supérieur du socle 8 de la partie principale 6, mais affleure sur son pourtour.

L'insert 7 comporte, sur toute sa hauteur, et de même qu'il a été décrit précédemment pour le premier mode de réalisation de l'invention, un évidemment axial dont la forme et les dimensions sont complémentaires de la forme et des dimensions de la surface extérieure de l'appendice 9 de la partie principale 6.

Une gorge sensiblement cylindrique 24 est, en outre, ménagée à la périphérie de l'appendice sensiblement tronconique 22 : les dimensions de la gorge 24 sont définies en fonction de la section du fil constituant le ressort de suspension 1. La mise en place et le maintien du ressort de suspension 1 se fait alors par clipsage dans la gorge 24, ce qui permet une grande diversité de sections de fil pour le ressort de suspension 1. Cette solution réduit en outre fortement les frottements du ressort contre l'insert 7 de l'élément d'appui 3, et limite ainsi fortement l'abrasion à l'interface avec le ressort 1.

Par ailleurs, la face inférieure de la base 21 de l'insert 7 comporte un lamage 25 dans lequel est formé un ensemble de nervures mâles 26, sensiblement radiales, dont les formes, dimensions, et répartition, sont complémentaires des formes, dimensions, et répartition des nervures femelles 20 de la face supérieure 11 du socle 8 de la partie principale 6. Dans des modes de réalisation alternatifs, dans lesquels les nervures 20 sont remplacées par des gorges concentriques, les nervures mâles 26 forment, sur la face inférieure de la base 21, un ensemble de lièvres aptes à coopérer avec des gorges.

Lorsque la partie principale 6 et l'insert 7 sont assemblés pour former l'élément d'appui 3 selon le second mode de réalisation de l'invention, l'insert 7 est emboîté sur l'appendice 9 de la partie principale 6, les nervures mâles 25 de l'insert 7 étant engagées avec les nervures femelles 20 précédemment décrites de la partie principale 6, permettant ainsi le blocage des deux parties de l'élément d'appui 3 l'une par rapport à l'autre. La partie principale 6 réalise alors la fonction active de l'appui, et les nervures 20 et 26 permettent également d'ajuster la raideur de l'ensemble. Le bord du lamage 25 forme ici un bol de saturation lorsque, le ressort étant en compression maximale, l'insert 7 est écrasé contre la partie principale 6 de l'élément d'appui 3.

L'invention permet ainsi de réaliser un appui de raideur variable pour un ressort de suspension 1 présentant à la fois une bonne tenue au gravillonnage et une tenue en endurance prolongée. Les deux modes de réalisation ont été présentés à titre d'exemple, et il sera ainsi compris que, sans sortir du contexte de l'invention, l'insert présenté dans le premier mode de réalisation peut ne pas présenter de bord de saturation 19.

## Revendications

1. Elément d'appui (3) pour un ressort de suspension (1) d'un véhicule automobile, composé d'une partie principale (6) et d'un insert (7) sensiblement rigide ou semi-rigide, le ressort de suspension (1) étant en appui direct sur l'insert sensiblement rigide ou semi-rigide (7), **caractérisé en ce que** la partie principale (6) est formée d'un socle (8) sensiblement tronconique à partir de la face supérieure (11), de plus petit diamètre, duquel s'étend, coaxialement, un appendice sensiblement tronconique (9), dont le plus grand diamètre est sensiblement inférieur au plus petit diamètre du socle (8).

2. Elément d'appui (3) selon la revendication 1, **caractérisé en ce que** l'insert (7) est formé d'une base (13) sensiblement tronconique à partir de la face supérieure de plus petit diamètre de laquelle s'étend, coaxialement, un appendice sensiblement tronconique (14), dont le plus grand diamètre est sensiblement inférieur au plus petit diamètre de la base (13), l'insert (7) comportant en outre un évidement axial dont la forme et les dimensions intérieures sont complémentaires de la forme et des dimensions extérieures de l'appendice (9) de la partie principale (6), un lamage (16) étant ménagé dans la partie inférieure de la base (13) de l'insert (7).

3. Elément d'appui (3) selon la revendication 2, **caractérisé en ce que** l'assemblage de la partie principale (6) et de l'insert (7) se fait par emboîtement de la face supérieure (11) du socle (8) de la partie principale (6) dans le lamage (16), la partie inférieure de la base (13) de l'insert (7) recouvrant alors complètement la face supérieure (11) et formant, autour de celle-ci, un bord de saturation (19).

4. Elément d'appui (3) selon l'une quelconque des revendications 1 à 3, **caractérisé en ce qu'**une lèvre de saturation (12), dont le diamètre est sensiblement supérieur au diamètre de la face inférieure (10) du socle (8) de la partie principale (6), s'étend autour de la face inférieure (10).

5. Elément d'appui selon l'une quelconque des revendications 1 à 4, **caractérisé en ce que** la partie supérieure de l'appendice (14) de l'insert (7) comporte une lèvre (18) de diamètre sensiblement supérieur au plus petit diamètre de l'appendice (14).

6. Dispositif de suspension d'un véhicule automobile **caractérisé en ce que** le ressort de suspension (1) est placé autour de l'appendice (14) de l'insert (7), entre la face supérieure de la base (13) de l'insert (7) et la face inférieure de la lèvre (18) de l'insert (7) d'un élément d'appui (3) selon la revendication 5.

7. Elément d'appui (3) selon la revendication 1, **caractérisé en ce que** l'insert (7) est formé d'une base sensiblement tronconique (21) à partir de la face supérieure, de plus petit diamètre, de laquelle, coaxialement, un appendice sensiblement tronconique (22) dont la partie supérieure est munie d'une calotte sensiblement hémisphérique (23), et **en ce que** l'insert (7) comporte, sur toute sa hauteur, un évidement axial dont la forme et les dimensions sont complémentaires de la forme et des dimensions extérieures de l'appendice (9) de la partie principale (6).

8. Elément d'appui (3) selon la revendication 7, **caractérisé en ce que** le diamètre de la base (21) est sensiblement égal au diamètre de la face supérieure (11) du socle (8) de la partie principale (6).

9. Elément d'appui (3) selon l'une quelconque des revendications 7 ou 8, **caractérisé en ce qu'**une gorge sensiblement cylindrique (24) est ménagée à la périphérie de l'appendice sensiblement tronconique (22) de l'insert (7), destinée à accueillir le ressort de suspension (1).

## Patentansprüche

1. Auflageelement (3) für eine Aufhängefeder (1) eines Kraftfahrzeugs, bestehend aus einem Hauptteil (6) und einem im Wesentlichen steifen oder halbsteifen Einsatz (7), wobei die Aufhängefeder (1) direkt auf dem im Wesentlichen steifen oder halbsteifen Einsatz (7) aufliegt, **dadurch gekennzeichnet, dass** der Hauptteil (6) von einem im Wesentlichen kegelstumpfförmigen Sockel (8) gebildet wird, ausgehend von dessen Oberseite (11) kleineren Durchmessers sich koaxial ein im Wesentlichen kegelstumpfförmiges Ansatzstück (9) erstreckt, dessen größter Durchmesser im Wesentlichen kleiner ist als der kleinste Durchmesser des Sockels (8).

2. Auflageelement (3) nach Anspruch 1, **dadurch gekennzeichnet, dass** der Einsatz (7) von einer im Wesentlichen kegelstumpfförmigen Basis (13) gebildet wird, ausgehend von deren Oberseite kleineren Durchmessers sich koaxial ein im Wesentlichen kegelstumpfförmiges Ansatzstück (14) erstreckt, dessen größter Durchmesser im Wesentlichen kleiner ist als der kleinste Durchmesser der Basis (13), wobei der Einsatz (7) außerdem eine axiale Aussparung aufweist, deren Form und Innenabmessungen zur Form und zu den Außenabmessungen des Ansatzstücks (9) des Hauptteils (6) komplementär sind, wobei eine Senkung (16) im unteren Teil der Basis (13) des Einsatzes (7) vorgesehen ist.

3. Auflageelement (3) nach Anspruch 2, **dadurch gekennzeichnet, dass** der Zusammenbau des Hauptteils (6) und des Einsatzes (7) durch Einfügen der Oberseite (11) des Sockels (8) des Hauptteils (6) in die Senkung (16) erfolgt, wobei der untere Teil der Basis (13) des Einsatzes (7) dann die Oberseite (11) vollständig bedeckt und um diese herum einen Sättigungsrand (19) bildet.

4. Auflageelement (3) nach einem der Ansprüche 1 bis 3, **dadurch gekennzeichnet, dass** eine Sättigungslippe (12), deren Durchmesser im Wesentlichen größer ist als der Durchmesser der Unterseite (10) des Sockels (8) des Hauptteils (6), sich um die Unterseite (10) herum erstreckt.

5. Auflageelement nach einem der Ansprüche 1 bis 4, **dadurch gekennzeichnet, dass** der obere Teil des Ansatzstücks (14) des Einsatzes (7) eine Lippe (18) mit einem im Wesentlichen größeren Durchmesser als der kleinste Durchmesser des Ansatzstücks (14) aufweist.

6. Aufhängungsvorrichtung eines Kraftfahrzeugs, **dadurch gekennzeichnet, dass** die Aufhängefeder (1) um das Ansatzstück (14) des Einsatzes (7) herum zwischen der Oberseite der Basis (13) des Einsatzes (7) und der Unterseite der Lippe (18) des Einsatzes (7) eines Auflageelements (3) nach Anspruch 5 platziert ist.

7. Auflageelement (3) nach Anspruch 1, **dadurch gekennzeichnet, dass** der Einsatz (7) von einer im Wesentlichen kegelstumpfförmigen Basis (21) gebildet wird, von deren Oberseite kleineren Durchmessers ausgehend sich koaxial ein im Wesentlichen kegelstumpfförmiges Ansatzstück (22), dessen oberer Teil mit einer im Wesentlichen halbkugelförmigen Kalotte (23) versehen ist, und dass der Einsatz (7) über seine ganze Höhe eine axiale Aussparung aufweist, deren Form und Abmessungen komplementär zur Form und den Außenabmessungen des Ansatzstücks (9) des Hauptteils (6) sind.

8. Auflageelement (3) nach Anspruch 7, **dadurch gekennzeichnet, dass** der Durchmesser der Basis (21) im Wesentlichen gleich dem Durchmesser der Oberseite (11) des Sockels (8) des Hauptteils (6) ist.

9. Auflageelement (3) nach einem der Ansprüche 7 oder 8, **dadurch gekennzeichnet, dass** eine im Wesentlichen zylindrische Kehle (24) am Umfang des im Wesentlichen kegelstumpfförmigen Ansatzstücks (22) des Einsatzes (7) vorgesehen ist, die dazu bestimmt ist, die Aufhängefeder (1) aufzunehmen.

## Claims

1. Support element (3) for a suspension spring (1) of a motor vehicle, consisting of a main portion (6) and a substantially rigid or semi-rigid insert (7), the suspension spring (1) resting directly on the substantially rigid or semi-rigid insert (7), **characterized in that** the main portion (6) is formed of a pedestal (8) that is substantially frustoconical from the upper face (11), of smaller diameter, from which extends coaxially a substantially frustoconical appendage (9) whose largest diameter is substantially smaller than the smallest diameter of the pedestal (8).

2. Support element (3) according to Claim 1, **characterized in that** the insert (7) is formed of a base (13) that is substantially frustoconical from the smaller diameter upper face from which extends, coaxially, a substantially frustoconical appendage (14) whose largest diameter is substantially smaller than the smallest diameter of the base (13), the insert (7) also comprising an axial recess whose shape and internal dimensions match the shape and external dimensions of the appendage (9) of the main portion (6), a flat (16) being arranged in the lower portion of the base (13) of the insert (7).

3. Support element (3) according to Claim 2, **characterized in that** the main portion (6) and the insert (7) are assembled by nesting the upper face (11) of the pedestal (8) of the main portion (6) in the flat (16), the lower portion of the base (13) of the insert (7) then completely covering the upper face (11) and forming a saturation edge (19) around the latter.

4. Support element (3) according to any one of Claims 1 to 3, **characterized in that** a saturation lip (12), whose diameter is substantially larger than the diameter of the lower face (10) of the pedestal (8) of the main portion (6), extends around the lower face (10).

5. Support element according to any one of Claims 1 to 4, **characterized in that** the upper portion of the appendage (14) of the insert (7) comprises a lip (18) of substantially larger diameter than the smallest diameter of the appendage (14).

6. Suspension device of a motor vehicle, **characterized in that** the suspension spring (1) is placed around the appendage (14) of the insert (7), between the upper face of the base (13) of the insert (7) and the lower face of the lip (18) of the insert (7) of a support element (3) according to Claim 5.

7. Support element (3) according to Claim 1, **characterized in that** the insert (7) is formed of a base (21) that is substantially frustoconical from the smaller diameter upper face from which, coaxially, a substantially frustoconical appendage (22) whose upper portion is furnished with a substantially hemispherical cap (23), and **in that** the insert (7) comprises, over its whole height, an axial recess whose shape and dimensions match the shape and external dimensions of the appendage (9) of the main portion (6).

8. Support element (3) according to Claim 7, **characterized in that** the diameter of the base (21) is substantially equal to the diameter of the upper face (11) of the pedestal (8) of the main portion (6).

9. Support element (3) according to either one of Claims 7 and 8, **characterized in that** a substantially cylindrical groove (24) is arranged on the periphery of the substantially frustoconical appendage (22) of the insert (7), designed to receive the suspension spring (1).
